# EUROPÄISCHE PATENTSCHRIFT

(11) **EP 1 896 256 B1**
(45) Veröffentlichungstag und Bekanntmachung des Hinweises auf die Patenterteilung: **27.01.2010**
(21) Anmeldenummer: 06754515.2
(22) Anmeldetag: 22.06.2006
(51) Int. Cl.: B32B 13/04, B32B 17/06, B32B 7/12, E04C 2/26, E04F 13/08, E04F 13/14, C09J 5/02, C03C 27/00, C09J 183/12, C09J 183/04

(54) **VERFAHREN ZUM HERSTELLEN EINER VERBUNDSTRUKTUR UND DAMIT HERGESTELLTE VERBUNDSTRUKTUR**
METHOD FOR PRODUCING A COMPOSITE STRUCTURE, AND A COMPOSITE STRUCTURE PRODUCED THEREBY
PROCEDE DE PRODUCTION D'UNE STRUCTURE COMPOSITE ET STRUCTURE COMPOSITE OBTENUE AU MOYEN DUDIT PROCEDE

(30) Priorität: 27.06.2005 DE 102005029844
(43) Veröffentlichungstag der Anmeldung: 12.03.2008
(73) Patentinhaber: STO AG, 79780 Stühlingen (DE)
(72) Erfinder: PFEIFFER, Christian, 89415 Lauingen (DE)
(74) Vertreter: Leinweber & Zimmermann
(86) Internationale Anmeldenummer: PCT/EP2006/006024
(87) Internationale Veröffentlichungsnummer: WO 2007/000279

(56) Entgegenhaltungen:
- EP-A- 0 810 085
- WO-A-96/26336
- DE-A1- 3 409 960
- DE-A1- 4 103 580
- DE-A1- 19 948 121

## Beschreibung

Die Erfindung betrifft ein Verfahren zum Herstellen einer Verbundstruktur, bei dem ein eine äußere Begrenzungsfläche der Verbundstruktur bildendes Verkleidungselement mit einem Haftmittel an einem Träger befestigt wird, nach dem Oberbegriff des Patentanspruchs 1, sowie eine mit einem derartigen Verfahren hergestellte Verbundstruktur.

Mit derartigen Verfahren hergestellte Verbundstrukturen werden beispielsweise zur Abdeckung von Gebäudefassaden eingesetzt. Dabei kann die Abdeckung einerseits aus gestalterischen Gründen, beispielsweise zum Erhalt einer gewünschten Farbgebung und andererseits aus Wetterschutzgründen erfolgen. In vielen Fällen wird auch der Erhalt einer bei wechselnden Witterungsbedingungen dauerhaften farblichen Gestaltung der Gebäudefassade mit solchen Verbundstrukturen gewünscht zu den genannten Zwecken einsetzbare Verbundstrukturen können in Form von vorgefertigten Fertigbauteilen vorliegen.

Bei in der EP 0 700 776 B1 beschriebenen Verfahren zum Herstellen solcher Verbundstrukturen wird ein Verkleidungselement in Form einer Glasscheibe mit einem als Haftmittel dienenden Verbundmörtel an einem Betonkörper befestigt. Der dabei eingesetzte Verbundmörtel ist mit Mangel an Hydratationswasser angemacht und besteht aus einem feinteiligen neutralen Zuschlagstoff, Zement und einer wässrigen Dispersion eines Polyacrylsäurederivats. Zur Herstellung der Verbundstruktur wird bei den bekannten Verfahren die Glasscheibe vor Erhärtung des Betons beschichtungsseitig mit dem als Träger dienenden Beton in Verbindung gebracht, wobei sich der Beton mit dem auf der Glasscheibe aufgetragenen Verbundmörtel monolithisch verbindet. Dazu ist es erforderlich, dass der Beton bei Anbringung der beschichteten Glasscheibe noch nicht vollständig ausgehärtet ist, weil es zur Herstellung der monolithischen Verbindung notwendig ist, dass die Kristallite des Betons bei der Hydratation in den Verbundmörtel hineinwachsen und sich mit den Kristalliten der Beschichtung verbinden. Das wird bei den bekannten Verfahren durch Einsatz eines mit Mangel an Hydratationswasser angemachten Verbundmörtels ermöglicht.

Mit dem gerade beschriebenen Verfahren ist die Herstellung einer Verbundstruktur mit ausreichenden Standzeiten und einer guten Temperaturwechselbeständigkeit möglich. Allerdings hat es sich bei der Ausführung dieser Verfahren als problematisch erwiesen, dass das Anbringen von Glasplatten an bereits ausgehärteten Betonwänden damit nicht möglich ist. Zur Lösung dieses Problems wird in der DE 199 48 121 B4 ein Verfahren der eingangs beschriebenen Art vorgeschlagen, bei dem die Glasplatte mit Hilfe eines vernetzten Silikonkautschuks an dem Träger befestigt wird, wobei der Silikonkautschuk an den jeweiligen Fügebereichen zum Glaskörper und zum Träger gleichzeitig abbinden kann. Dabei wird von der Erkenntnis Gebrauch gemacht, dass eine dauerhafte Verbindung von Glas und Beton mit Hilfe eines Silikonkautschuks auch dann möglich ist, wenn der Beton bereits vollständig abgebunden ist, weil die Verklebung mit Hilfe eines Silikonkautschuks auf das Zusammenwirken von Kohäsion und Adhäsion sowie auf Diffusionsvorgänge und elektrostatische Anziehung im molekularen Bereich zurückzuführen ist. Ferner wird bei diesem bekannten Verfahren die erforderliche Temperaturwechselbeständigkeit unter Ausnutzung der elastischen Eigenschaften des vernetzten Silikonkautschuks erreicht. Allerdings hat es sich gezeigt, dass der optische Eindruck von mit diesem bekannten Verfahren hergestellten Verbundstrukturen in vielen Fällen noch zu wünschen übrig lässt. Das ist im besonderen dann störend, wenn die Verbundstruktur zu dekorativen Zwecken an Gebäudefassaden angebracht werden soll.

In der WO 96/26336 A ist ein Verfahren zum Herstellen einer Glasverbundplatte beschrieben, bei dem ein dünnes Metallblech zusammen mit einer folienartigen ersten Klebstoffschicht durch Aufwalzen und unter Anwendung von Temperatur auf eine Seite einer Glasscheibe zum Erreichen eines Vorverbundes gebracht wird. Bei dem bekannten Verfahren wird auf die vorgesehenen Stellen des dünnen Metallblechs des noch erwärmten Vorverbundes eine klebebandartige zweite Klebstoffschicht und ein mit einer ausreichend großen Auflagefläche versehenes Befestigungsmittel aufgelegt. Danach wird der gesamte Verbund einem temperatur- und druckbeaufschlagten Autoklavenprozeß unterworfen.

Angesichts der vorstehend beschriebenen Probleme im Stand der Technik liegt der Erfindung die Aufgabe zugrunde, ein Verfahren zum Herstellen einer Verbundstruktur bereitzustellen, mit dem unter Gewährleistung einer ausreichenden Dauerhaftigkeit der Struktur zuverlässig eine gewünschte gestalterische Wirkung sichergestellt werden kann.

Erfindungsgemäß wird diese Aufgabe durch die im kennzeichnenden Teil des Patentanspruchs 1 angegebene Weiterbildung der bekannten Verfahren gelöst.

Diese Erfindung geht auf die Erkenntnis zurück, dass die bei Einsatz der bekannten Verfahren beobachteten optischen Mängel darauf zurückzuführen sind, dass es bei dem Auftrag der Haftmittel mit der zum Erhalt der gewünschten Dauerhaftigkeit und Temperaturwechselbeständigkeit erforderlichen Schichtdicke von mehreren Millimetern in vielen Fällen zur Bildung von Luftblasen kommt, welche das optische Erscheinungsbild beeinträchtigen. Diese Luftblasen entstehen nicht nur durch Lufteinflüsse beim Beschichtungsvorgang, sondern im besonderen auch bei der Aushärtung des Haftmittels zwischen dem Verkleidungselement und dem Träger und sind daher bei der Ausführung der bekannten Verfahren unvermeidbar.

Bei dem erfindungsgemäßen Verfahren wird eine durch Luftblasen in dem Haftmittel hervorgebrachte optische Beeinträchtigung dadurch vermieden, dass zur Herstellung der gewünschten dekorativen Wirkung zunächst eine dünne Schicht einer funktionellen Beschichtungsmasse auf der an dem Träger zu befestigenden, bzw. dem Träger zugewandten Begrenzungsfläche des Verkleidungselementes aufgebracht wird. Dünne Schichten mit einer Schichtdicke von 2 mm oder weniger können ohne Bildung von Luftblasen in der Schicht aushärten, weil die beim Aushärtungsvorgang entstehenden Gase noch mit ausreichender Wahrscheinlichkeit die Schicht durchdringen. Darüber hinaus wird die funktionelle Beschichtungsmasse vor der Befestigung an dem Träger aufgetragen. Daher wird das Entweichen von bei der Aushärtung entstehenden Gasen durch den Träger nicht behindert. Ferner können Lufteinschlüsse beim Auftragen solch dünner Schichten besonders zuverlässig vermieden werden.

Nach dem Aushärten der auf das Verkleidungselement aufgetragenen funktionellen Beschichtungsmasse kann diese einen Sichtschutz für das zwischen der funktionellen Beschichtungsmasse und dem Träger aufzutragende Haftmittel bilden, durch den das Haftmittel von außen nicht mehr erkennbar ist. Daher wird das optische Erscheinungsbild erfindungsgemäß hergestellter Verbundstrukturen auch dann nicht mehr beeinträchtigt, wenn es beim Auftragen und/oder bei der Aushärtung des zwischen der funktionellen Beschichtungsmasse und dem Träger angeordneten Haftmittels zu Blasenbildungen kommt.

Ferner hat es sich bei der Herstellung von Verbundstrukturen mit erfindungsgemäßen Verfahren als günstig erwiesen dass unabhängig von der gewünschten optischen Gestaltung gleichbleibende Haftmittel zum Einsatz kommen können, weil die gewünschte optische Wirkung durch die nur in geringen Mengen benötigte funktionelle Beschichtungsmasse erreicht wird. Die bei erfindungsgemäßen Verfahren eingesetzte funktionelle Beschichtungsmasse zweist einen vernetzten, insbesondere vulkanisierten, Silikonkautschuk, insbesondere Polydimethylsiloxan, auf, dem ggf. zum Erhalt der gewünschten optischen Wirkung ein Pigment zugegeben wird. Dabei kann es sich um eine einkomponentige fließfähige, wasserfeste Masse handeln. Durch Einsatz einer Silikonkautschuk enthaltenden funktionellen Beschichtungsmasse wird nicht nur die gewünschte optische Wirkung erreicht, sondern auch ein zuverlässiger UV-Schutz für die zwischen der funktionellen Beschichtungsmasse und dem Träger anzuordnende Haftmittelschicht sichergestellt. Der Pigmentanteil beträgt vorzugsweise 5 Gew.% oder weniger, bezogen auf das Gesamtgewicht der funktionellen Beschichtungsmasse. Dadurch wird sichergestellt, dass die Haftungseigenschaften durch den Pigmentanteil nicht wesentlich beeinflusst werden. Die gewünschte homogene und gleichmäßige gestalterische Wirkung kann erreicht werden, wenn der Pigmentanteil 0,1 Gew. % oder mehr, insbesondere 1 Gew. % oder mehr beträgt. Bei den Pigmenten kann es sich um organische Pigmente, anorganische Pigmente oder Mischungen daraus handeln. Im Hinblick auf die Schichtdicke der funktionellen Beschichtungsmasse hat es sich als günstig erwiesen, wenn die Pigmente eine Teilchengröße von 50 µm oder weniger, insbesondere 10 µm oder weniger, besonders bevorzugt 1 µm oder weniger aufweisen. Dabei hat es sich im Hinblick auf den Erhalt der gewünschten Pigmenteigenschaften als günstig erwiesen, wenn die Pigmente eine Teilchengröße von 0,05 µm oder mehr, insbesondere 0,1 µm oder mehr aufweisen.

Im Rahmen der Erfindung ist auch daran gedacht, als Haftmittel einen vernetzten Silikonkautschuk zu benutzen. Dabei hat es sich allerdings als problematisch erwiesen, dass mit Silikonkautschuk nur eine mangelhafte Haftung an feuchten Trägeroberflächen erreichbar ist. Dieses Problem kann dadurch gelöst werden, dass ein Haftmittel auf Basis hochmolekularer Polyether mit endständigen reaktiven Silangruppen und/oder entsprechender Hybridpolymere verwendet wird, weil derartige Haftmittel auch an feuchten Oberflächen eine zufriedenstellende Haftung sicherstellen. Allerdings weisen solche auch als MS-Polymere bezeichnete Haftmittel nur eine mangelhafte UV-Beständigkeit auf. Daher hat es sich im Rahmen der Erfindung als besonders günstig erwiesen, wenn die funktionelle Beschichtungsmasse einen Silikonkautschuk aufweist, welcher einen UV-Schutz bewirkt und die zwischen der funktionellen Beschichtungsmasse und dem Träger angeordnete Haftmittelschicht ein MS Polymer gemäß vorstehender Definition aufweist. Dabei wird ergänzend von der Erkenntnis Gebrauch gemacht, dass mit Hilfe der endständigen Silangruppen solcher Haftmittel einerseits eine gute Haftung an dem die funktionelle Beschichtungsmasse bildenden Silikonkautschuk und andererseits eine gute Haftung an einem bei der Herstellung von Fassadenverkleidungen üblicherweise überwiegend aus anorganischen bzw. mineralischen Stoffen bestehenden Träger erreichbar ist. Die Aushärtungsgeschwindigkeit des Haftmittels kann durch Zugabe von Feuchtigkeit und/oder Änderung der Temperatur beeinflusst werden.

Im Hinblick auf die angestrebte Temperaturwechselbeständigkeit hat sich im Rahmen der Erfindung als günstig erwiesen, wenn die Dicke der zwischen der funktionellen Beschichtungsmasse und dem Träger angeordneten Haftmittelschicht 2,5 bis 5 mm, vorzugsweise 3 bis 4 mm beträgt. Dabei kann eine zufriedenstellende Haftung sichergestellt werden, wenn das Verhältnis der Dicke Dᵥ des Verkleidungselementes zur Dicke D_{H} der Haftmittelschicht im Bereich von 0,5 ≤ Dᵥ / D_{H} ≤ 2,5; insbesondere 1 ≤ Dᵥ / D_{H} ≤ 1,5 liegt.

In vielen Fällen werden vorgefertigte Verbundstrukturen in Form von Fertigbauteilen zum Zweck der Fassadenverkleidung so an der Fassade befestigt, dass zwischen den einzelnen Fertigbauteilen noch eine sichtbare Fuge verbleibt. In diesen Fällen kann eine zufriedenstellende Standzeit von mit erfindungsgemäßen Verfahren hergestellten Verbundstrukturen erreicht werden, wenn ein die Verbundstruktur bzw. das Fertigbauteil umlaufender Rand der Haftmittelschicht mit einer für Licht mit einer Wellenlänge von weniger als 400 nm undurchlässigen Beschichtung, insbesondere Farbbeschichtung versehen wird, weil auf diese Weise auch in dem im allgemeinen lichtdurchlässigen Fugenbereich ein wirksamer UV-Schutz bereitgestellt werden kann, welcher eine ausreichende Standzeit der Verbundstruktur unbhängig von der Wahl des Haftmittels gewährleistet. Zusätzlich oder alternativ können die Fugen auch mit einem Dichtstoff auf Polydimethylsiloxan-Basis geschlossen werden.

Wie der vorstehenden Erläuterung erfindungsgemäßer Verfahren zu entnehmen ist, zeichnet sich eine mit diesem Verfahren hergestellte Verbundstruktur im wesentlichen dadurch aus, dass die dem Träger zugewandte Begrenzungsfläche des Verkleidungselementes mit einer funktionellen Beschichtungsmasse versehen ist und dass die Verbindung zwischen dem Verkleidungselement und dem Träger bewirkende Haftmittel zwischen der funktionellen Beschichtungmasse und dem Träger angeordnet ist. Dabei ist im Rahmen der Erfindung insbesondere an den Einsatz von Trägem in Form von Fertigbauelementen gedacht. Als besonders günstig hat es sich dabei erwiesen, wenn das Fertigbauelement ein für Wasserdampf durchlässiges Leichtbauelement aufweist. Solche Leichtbauelemente sind beispielsweise in der EP 0 290 881 B1 beschrieben. Der Offenbarungsgehalt dieser Schrift wird hinsichtlich der Struktur und Herstellung von im Rahmen dieser Erfindung einsetzbaren Leichtbauelementen hiermit durch ausdrückliche Inbezugnahme in diese Beschreibung aufgenommen.

Der Einsatz von für Wasserdampf durchlässigen Leichtbauelementen der beispielsweise in der EP 0 290 881 B1 beschriebenen Art ist besonders vorteilhaft, weil die Wasserdampfdurchlässigkeit des Leichtbauelementes eine raschere Aushärtung des Haftmittels ermöglicht. Ferner kann dadurch auch eine bessere Beständigkeit erreicht werden, weil beim Vorgang der Herstellung der Verbundstrukturr beim Vorgang der Befestigung der Verbundstruktur an einer Fassade und/oder danach in die Verbundstruktur und/oder die Fassade eindringendes Wasser wegen der Diffusionsoffenheit des Leichtbauelementes später auch wieder austreten kann.

Der die Wasserdampfdurchlässigkeit bezeichnende i-Wert gemäß DIN EN ISO 7783 T2 beträgt bei zur Herstellung erfindungsgemäßer Verbundstrukturen geeigneten Leichtbauelementen zweckmäßigerweise 10 bis 16, insbesondere etwa 12 bis 14.

Die erforderliche Festigkeit eines im Rahmen der Erfindung besonders bevorzugten Trägers in Form eines Leichtbauelementes kann ohne nennenswerte Beeinträchtigung der Wasserdampfdurchlässigkeit erreicht werden, wenn das als Träger eingesetzte Leichtbauelement ein- oder beidseitig mit einer Gewebearmierung versehen ist. Eine in Form eines Fertigbauteils vorliegende erfindungsgemäße Verbundstruktur kann besonders einfach an einer Fassade befestigt werden, wenn im Bereich einer dem Verkleidungselement abgewandten Begrenzungsfläche Befestigungselemente zum Befestigen der Verbundstruktur an einer Fassade an dem vorzugsweise als Leichtbauelement vorliegenden Träger angebracht sind.

Im Sinne der gewünschten statischen Festigkeit hat es sich im Hinblick auf die Vermeidung übermäßiger Kosten als zweckmäßig erwiesen, wenn der Träger einen Elastizitätsmodul gemäß EN 310 1000 bis 1800 N/mm², insbesondere 1200 bis 1600 N/mm² beträgt. Diese Angaben beziehen sich auf eine Plattendicke von 20 mm und ein Gewicht von 10 kg/m².

Dabei kann ein Bruchmoment gemäß DIN EN 100 von 60 Nm oder mehr erreicht werden.

Wie der vorstehenden Erläuterung erfindungsgemäßer Verfahren zu entnehmen ist, besteht das Verkleidungselement erfindungsgemäßer Verbundstrukturen vorzugsweise zumindest teilweise aus einem lichtdurchlässigen Material, wie etwa Glas, durch das die auf der dem Träger zugewandten Begrenzungsfläche aufgetragene Beschichtungsmasse sichtbar ist. Bei Einsatz von Verkleidungselementen in Form von Glasscheiben kann mit Hilfe der funktionellen Beschichtungsmasse nicht nur eine gewünschte farbliche Gestaltung erreicht werden, sondern auch ein ausreichender Splitterschutz bereitgestellt werden. Daher können erfindungsgemäße Verbundstrukturen unter Gewährleistung ausreichender Splitterschutzeigenschaften mit Verkleidungselementen in Form von herkömmlichen Floatglasscheiben als Verkleidungselemente hergestellt werden.

## Patentansprüche

1. Verfahren zum Herstellen einer Verbundstruktur, bei dem ein eine äußere Begrenzungsfläche der Verbundstruktur bildendes Verkleidungselement mit einem Haftmittel an einem Träger befestigt wird, **dadurch gekennzeichnet, daß** eine mit dem Haftmittel an dem Träger zu befestigende Begrenzungsfläche des Verkleidungselementes vor der Befestigung an dem Träger derart mit einer funktionellen Beschichtungsmasse mit einer Schichtdicke von 0,1 mm bis 2 mm, vorzugsweise 0,5 mm bis 1,5 mm, beschichtet wird, daß die funktionelle Beschichtungsmasse nach dem Aushärten einen Sichtschutz für das zwischen der funktionellen Beschichtungsmasse und dem Träger aufzutragende Haftmittel bildet, durch den das Haftmittel von außen nicht mehr erkennbar ist,
**dadurch gekennzeichnet, daß** die Beschichtungsmasse einen vorzugsweise vernetzten Silikonkautschuk, insbesondere auf Polydimethylsiloxan-Basis, und/oder Pigmente aufweist.

2. Verfahren nach Anspruch 1, **dadurch gekennzeichnet, daß** der Pigmentanteil 5 Gew.-% oder weniger und/oder 0,1 Gew.% oder mehr, bezogen auf das Gesamtgewicht der funktionellen Beschichtungsmasse, beträgt.

3. Verfahren nach einem der vorhergehenden Ansprüche, **dadurch gekennzeichnet, daß** ein Haftmittel auf Basis hochmolekularer Polyether mit endständigen reaktiven Silangruppen und/oder entsprechender Hybridpolymere verwendet wird.

4. Verfahren nach einem der vorhergehenden Ansprüche, **dadurch gekennzeichnet, daß** die Dicke der Haftmittelschicht 2,5 mm bis 5 mm, vorzugsweise 3 mm bis 4 mm, beträgt.

5. Verfahren nach einem der vorhergehenden Ansprüche, **dadurch gekennzeichnet, daß** das Verhältnis der Dicke Dᵥ des Verkleidungselementes zur Dicke D_{H} der Haftmittelschicht im Bereich 0,5 ≤ Dᵥ / D_{H} ≤ 2,5, insbesondere 1 ≤ Dv / D_{H} ≤ 1,5, liegt.

6. Verfahren nach einem der vorhergehenden Ansprüche, **dadurch gekennzeichnet, daß** ein die Verbundstruktur umlaufender Rand der Haftmittelschicht mit einer für Licht mit einer Wellenlänge von weniger als 400 nm undurchlässigen Beschichtung, insbesondere Farbbeschichtung, versehen wird.

7. Verfahren nach einem der vorhergehenden Ansprüche, **dadurch gekennzeichnet, daß** die Aushärtungsgeschwindigkeit des Haftmittels durch Zugabe von Feuchtigkeit und/oder Temperaturänderung beeinflußt wird.

8. Verfahren nach einem der vorhergehenden Ansprüche, **dadurch gekennzeichnet, daß** organische und/oder anorganische Farbpigmente mit einer Teilchengröße im Bereich von 0,05 bis 50 µm, insbesondere 0,05 bis 10 µm, vorzugsweise 0,1 bis 1 µm, für die Beschichtungsmasse verwendet werden.

9. Verbundstruktur, hergestellt mit einem Verfahren nach einem der vorhergehenden Ansprüche.

10. Verbundstruktur nach Anspruch 9, **dadurch gekennzeichnet, daß** der Träger ein Fertigbauelement, insbesondere ein für Wasserdampf durchlässiges Leichtbauelement, aufweist.

11. Verbundstruktur nach einem der Ansprüche 9 und 10, **dadurch gekennzeichnet, daß** die Wasserdampfdurchlässigkeit des Leichtbauelements gemäß DIN EN ISO 7783 T2 10 bis 16, insbesondere 12 bis 14 (i-Wert), beträgt.

12. Verbundstruktur nach einem der Ansprüche 9 bis 11, **dadurch gekennzeichnet, daß** das Fertigbauelement im Bereich einer dem Verkleidungselement abgewandten Begrenzungsfläche Befestigungselemente zum Befestigen der Verbundstruktur an einer Fassade aufweist.

13. Verbundstruktur nach einem der Ansprüche 9 bis 12, **dadurch gekennzeichnet, daß** das Verkleidungselement zumindest teilweise aus einem lichtdurchlässigen Material, insbesondere Glas, besteht, durch das die auf der dem Träger zugewandten Begrenzungsfläche des Verkleidungselementes aufgetragene Beschichtungsmasse sichtbar ist.

## Claims

1. A method for producing a composite structure wherein a covering element forming an outer limit surface of the composite structure is attached by an adhesive medium to a support, **characterised in that** a limit surface of the covering element to be attached by the adhesive medium to the support is coated with a functional coating mass with a layer thickness of 0.1 mm to 2 mm, preferably 0.5 mm to 1.5 mm, before attachment to the support, that after hardening the functional coating mass forms a screen for the adhesive medium to be applied between the functional coating mass and the support, by means of which the adhesive medium can no longer be seen from the outside,
**characterised in that** the coating mass has a preferably cross-linked silicone rubber, in particular with a polydimethylsiloxane base, and/or pigments.

2. The method according to Claim 1, **characterised in that** the pigment portion is 5 % by weight or less and/or 0.1 % by weight or more in relation to the overall weight of the functional coating mass.

3. The method according to any of the preceding claims, **characterised in that** an adhesive medium with a high molecular polyether base with terminal reactive silane groups and/or corresponding hybrid polymers is used.

4. The method according to any of the preceding claims, **characterised in that** the thickness of the adhesive medium layer is 2.5 mm to 5 mm, preferably 3 mm to 4 mm.

5. The method according to any of the preceding claims, **characterised in that** the ratio of the thickness Dᵥ of the covering element to the thickness D_{H} of the adhesive medium layer comes within the range of 0.5 ≤ Dᵥ/D_{H} ≤ 2.5, in particular 1 ≤ Dᵥ / D_{H} ≤ 1.5.

6. The method according to any of the preceding claims, **characterised in that** an edge of the adhesive medium layer extending around the composite structure is provided with a coating, in particular a colour coating, impervious to light with a wavelength of less than 400 nm.

7. The method according to any of the preceding claims, **characterised in that** the hardening speed of the adhesive medium is effected by the addition of moisture and/or a change in temperature.

8. The method according to any of the preceding claims, **characterised in that** organic and/or inorganic colour pigments with a particle size in the range of from 0.05 to 50 µm, in particular 0.05 to 10 µm, preferably 0.1 to 1 µm, are used for the coating mass.

9. A composite structure produced by a method according to any of the preceding claims.

10. The composite structure according to Claim 9, **characterised in that** the support has a prefabricated element, in particular a lightweight construction element permeable to water vapour.

11. The composite structure according to either of Claims 9 and 10, **characterised in that** the water vapour permeability of the lightweight construction element according to DIN EN ISO 7783 T2 is 10 to 16, in particular 12 to 14 (i value).

12. The composite structure according to any of Claims 9 to 11, **characterised in that** the prefabricated element has attachment elements in the region of a limit surface facing away from the covering element for attaching the composite structure to a façade.

13. The composite structure according to any of Claims 9 to 12, **characterised in that** the covering element is made at least partially of a light-permeable material, in particular glass, through which the coating mass applied to the limit surface of the covering element facing towards the support is visible.

## Revendications

1. Procédé de production d'une structure composite, dans lequel un élément d'habillage formant une surface de délimitation extérieure de la structure composite est fixé sur un support au moyen d'un adhésif,
**caractérisé en ce qu'**une surface de délimitation de l'élément d'habillage destinée à être fixée sur le support au moyen de l'adhésif est enduite d'un matériau de revêtement fonctionnel selon une épaisseur de couche allant de 0,1 mm à 2 mm, de préférence de 0,5 mm à 1,5 mm, préalablement à ladite fixation sur ledit support, de sorte que le matériau de revêtement fonctionnel constitue, après le durcissement, une couche de sûreté pour l'adhésif destiné à être appliqué entre le matériau de revêtement fonctionnel et le support, à travers laquelle l'adhésif n'est plus visible depuis l'extérieur,
et **en ce que** le matériau de revêtement présente un caoutchouc de silicone de préférence réticulé, notamment à base de polydiméthylsiloxane, et/ou des pigments.

2. Procédé selon la revendication 1, **caractérisé en ce que** la proportion des pigments est de 5 % en poids maximum et/ou de 0,1 % en poids minimum, par rapport au poids total du matériau de revêtement fonctionnel.

3. Procédé selon l'une des revendications précédentes, **caractérisé en ce qu'**on utilise un adhésif à base de polyéther de poids moléculaire élevé à groupes terminaux réactifs silane et/ou de polymères hybrides correspondants.

4. Procédé selon l'une des revendications précédentes, **caractérisé en ce que** l'épaisseur de la couche d'adhésif va de 2,5 mm à 5 mm, de préférence de 3 mm à 4 mm.

5. Procédé selon l'une des revendications précédentes, **caractérisé en ce que** le rapport de l'épaisseur Dv de l'élément d'habillage à l'épaisseur D_{H} de la couche d'adhésif se situe dans la plage de 0,5 ≤ Dᵥ/D_{H} ≤ 2,5, notamment de 1 ≤ Dᵥ/D_{H} ≤ 1,5.

6. Procédé selon l'une des revendications précédentes, **caractérisé en ce qu'**un bord de la couche d'adhésif entourant la structure composite est pourvu d'un revêtement, notamment d'un revêtement coloré, imperméable à une lumière de longueur d'onde inférieure à 400 nm.

7. Procédé selon l'une des revendications précédentes, **caractérisé en ce que** la vitesse de durcissement de l'adhésif est modifiée par apport d'humidité et/ou par un changement de température.

8. Procédé selon l'une des revendications précédentes, **caractérisé en ce qu'**on utilise des pigments colorés organiques et/ou inorganiques dont la taille particulaire se situe dans la plage allant de 0,05 à 50 µm, notamment de 0,05 à 10 µm, et de préférence de 0,1 à 1 µm pour le matériau de revêtement.

9. Structure composite, produite suivant un procédé selon l'une des revendications précédentes.

10. Structure composite selon la revendication 9, **caractérisée en ce que** le support présente un élément de construction préfabriqué, notamment un élément de construction léger perméable à la vapeur d'eau.

11. Structure composite selon l'une des revendications 9 et 10, **caractérisée en ce que** la perméabilité à la vapeur d'eau de l'élément de construction léger va de 10 à 16, notamment de 12 à 14 (valeur i), conformément à la norme DIN EN ISO 7783 T2.

12. Structure composite selon l'une des revendications 9 à 11, **caractérisée en ce que** l'élément de construction préfabriqué présente, dans le secteur d'une surface de délimitation détournée de l'élément d'habillage, des éléments de fixation permettant de fixer la structure composite à une façade.

13. Structure composite selon l'une des revendications 9 à 12, **caractérisée en ce que** l'élément d'habillage est composé, au moins en partie, d'un matériau translucide, notamment de verre, à travers lequel le matériau de revêtement appliqué sur la surface de délimitation de l'élément d'habillage qui est tournée vers le support est visible.
